# EUROPEAN PATENT SPECIFICATION

(11) **EP 3 551 795 B1**
(45) Date of publication and mention of the grant of the patent: **31.07.2024**
(21) Application number: 16923432.5
(22) Date of filing: 08.12.2016
(51) Int. Cl.: A41D 31/06, B32B 9/02, D06M 19/00, A47G 9/02, D04H 1/02

(54) **COMPOSITE DOWN FEATHER SHEET WITH ELASTIC ADHESIVE WEBS**
ZUSAMMENGESETZTES DAUNENFEDERLAKEN MIT ELASTISCHEN KLEBENDEN GEWEBEN
FEUILLE DE DUVET COMPOSITE COMPORTANT DES COUCHES D'ADHÉSIF ÉLASTIQUE

(43) Date of publication of application: 16.10.2019
(73) Proprietor: Reuben, Ronie, Mont-Royal, Québec H3S 1A1 (CA)
(72) Inventor: Reuben, Ronie, Mont-Royal, Québec H3S 1A1 (CA)
(74) Representative: Sach, Greg Robert
(86) International application number: PCT/IB2016/057434
(87) International publication number: WO 2018/104768

(56) References cited:
- EP-A1- 2 774 499
- WO-A1-2015/103684
- WO-A1-2015/103684
- CA-A1- 2 904 672
- CN-A- 101 787 619
- US-A- 4 251 587
- US-A1- 2004 126 580
- US-A1- 2016 262 556
- US-A1- 2016 270 565

## Description

### TECHNICAL FIELD

The present invention relates to down insulation and more specifically to a composite down insulating sheet comprised of a down core layer having a stretchable elastic adhesive web bonded to opposed faces of the down core layer.

### BACKGROUND OF THE INVENTION

In my US Patent 6,025,041 there is disclosed a down feather sheet of homogeneous form and wherein the down feathers are retained by a chemical binder. Such a sheet overcame the prior art problems of manipulating loose down feathers during the manufacture of fabric articles such as clothing, duvet covers, pillows, etc.. In my most recently published US Patent Publication No.20015/0196145-A1 published on July16, 2015 it is disclosed that there is a need to make the down feather sheet stretchable while preventing the escapement of the down feathers. Stretchable down is desirable in the manufacture of several insulated products where it is desirable to apply a pulling force on the insulation. Such stretchable down also has applications in the fabrication of certain articles of apparel. There is therefore disclosed the use of a dry binder and mixed with the down feathers which are deposited on an elastomeric sheet and when subjected to a heat treatment the binder melts or soften to bind the feathers and to the elastomeric sheet to form a stretchable down feather sheet.

When manufacturing fabric articles with down feather sheets, patterns are cut in the shell material and lining material as well as in the down feather sheet prior to assembly. It is important that these different material and insulation pieces be perfectly aligned prior to stitching and assembly to form the fabric article, and this is particularly so when fabricating articles of apparel. Often the fabric material sheets are given a stitching pattern in overlaid material sheets prior to the cutting of pattern pieces. This ads to costs as it is time consuming but it binds the material together in alignment when cutting the pattern pieces. It is also desirable that during use of the fabric article, and particularly articles of apparel, that the down be held firmly in place during such use. Because articles of apparel are usually washed and dried in washing and drying machines, the outer shell fabric, the down insulation and the lining fabric are subjected to all sorts of pulling forces and water infiltration. It is therefore desirable with articles of apparel which do not have stitch patterns to maintain the insulation firmly captive in the article of apparel between the opposed fabric walls to prevent strain on the down feather clusters which are bond together in the down sheet.
US2016/262556 describes a method of fabricating a thermally insulating stretchable down feather sheet.

### SUMMARY OF INVENTION

It is therefore a feature of the present invention to provide a composite down insulating feather which overcomes the above mentioned disadvantages of the prior art.

Another feature of the present invention is to provide a composite down feather sheet which has a core of bound down feathers bonded between opposed fiber thin elastic adhesive webs.

Another feature of the present invention is to provide a composite down insulating feather sheet capable of bonding to opposed fabric sheets forming an article of fabric wherein the down insulating sheet is firmly secured to the opposed fabric sheets inside the article of fabric.

A further feature of the present invention is to provide a method of fabricating a composite down feather sheet wherein the down core has opposed elastic adhesive webs bonded to opposed surfaces thereof.

A still further feature of the present invention is to provide a method of fabricating down insulated composite fabric compromised of a composite down feather sheet bonded to a shell fabric sheet on one side and to a lining material on an opposed side by opposed adhesive webs bonded to the down feather core of the down feather sheet.

From a broad aspect, there is provided a composite material insulating sheet and a method of fabricating thereof, according to the appended claims

According to the above feature, from abroad aspect, the present invention provides a composite down feather sheet comprised of an insulating core of down feathers bound together by a chemical binding agent. The core of down feathers is of substantially constant thickness and defines opposed flat faces. A web of elastic stretchable adhesives is bonded to at least one of the opposed flat faces of the core.

According to another broad aspect of the present invention there is provided a method of fabricating a composite down feather sheet. The method comprises conveying on a conveyor and under a mixing chamber a dry web of stretchable elastic adhesive from a roll of such web. Down feathers mixed with a binding agent are deposited on the web from a mixing chamber as the web is displaced by a conveyor whereby to deposit a core of down feathers of substantially constant thickness on the dry web of stretchable elastic adhesive. The elastic adhesive web with the core of down feathers mixed with the chemical binder is then conveyed through an oven set at a predetermined temperature to cause the chemical agent to bind to the down feathers and the web of stretchable elastic adhesive to bind to a bottom surface of the core of down feathers.

According to a further broad aspect of the present invention there is provided a method of fabricating down insulated composite fabric for the manufacture of fabric articles. The method comprises providing a down feather sheet having a core of down feathers bound together by a chemical binding agent. The sheet has a web of stretchable elastic adhesive bonded to opposed faces thereof. The down feather sheet is then conveyed between a shell fabric sheet and a sheet of lining material. The down feather sheet disposed between the shell fabric sheet and the lining material is then subjected to a heat treatment at a predetermined temperature to cause the webs of stretchable elastic material to melt and further bond to the shell fabric material and the lining material securing the core of down feathers therebetween to form the composite down insulated composite fabric sheet.

### DESCRIPTION OF THE DRAWINGS

A preferred embodiment of the present invention will now be described with reference to the accompanying drawings in which;
Figure 1 is a perspective view illustrating the structure of the composite down feather sheet of the present invention;
Figure 2 is a plan view illustration of the composition of the elastic adhesive formed of interconnected polyurethane aliphatic fibers;
Figure 3 is a simplified schematic illustration of the method of fabricating the composite down feather sheet of the present invention;
Figure 4 is a further simplified schematic illustration of the method of fabricating the composite down insulating fabric sheet for the manufacture of fabric articles wherein the down insulation sheet is bonded to an outer shell fabric sheet and a lining material;
Figure 5 is a fragmented section view illustrating the composition of the composite material insulating sheet for the manufacture of fabric articles;
Figure 6 is a fragmented plan view illustrating various stitch patterns that can be formed in the composite material insulating sheet for the manufacture of fabric articles;
Figure 7 is a cut pattern piece for an article of apparel and having a stitch pattern formed therein;
Figure 8A is a fragmented section view illustrating a down insulated sheet which is not attached to a shell fabric sheet and a lining material sheet undergoing distortion;
Figure 8B is a view similar to Figure 8A, but showing the down insulated sheet bonded to the shell fabric sheet and lining material sheet undergoing distortion, and
Figure 9 is an enlarged microscopic view showing the bonded stretchable elastic adhesive web secured the feather clusters of the feather core.

### DETAILED DESCRIPTION

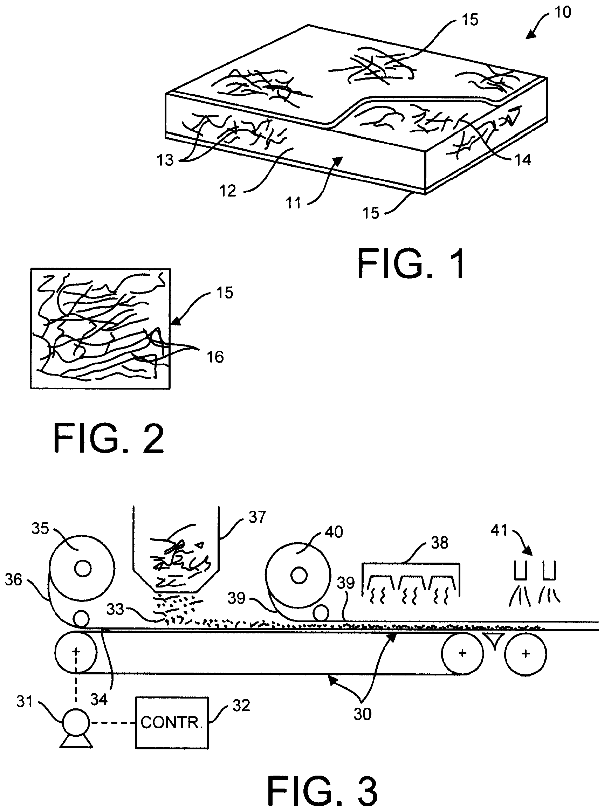

Referring now to the drawings, and more particularly to Figures 1 and 2, there is shown generally at 10 the composite down feather sheet of the present invention. It is comprised of an insulating core 11 of down feathers 12 bound together by a chemical binding agent 13 in powder form or fiber form or mixtures thereof. The core 11 is a homogeneous core of substantially constant thickness and defines opposed flat faces 14. A web 15 of stretchable elastic adhesive is bonded to each of the opposed flat faces 14 by heat treatment at specific temperatures.

As shown in Figure 2, the web 15 of the stretchable adhesive is formed by polyurethane aliphatic fibers 16 bound together in a thin fiber film to form the thin webs 15. Such as web has multi-directional stretchability. Such a web is formed by random polyurethane fibers of random shape and is not a net of oriented stretchable fibers interconnected in a pattern with large openings between the interconnected fibers. It is a breathable homogeneous air permeable web. The thin web has a weight of between 12 gr/sq meters to 70 gr/sq meters. The fibers are white in coloration and the web exhibit transparency. Accordingly, it would not obstruct the coloration of colored down that may be used in articles of apparel or other fabric articles such as duvet covers, pillows, etc..where transparent sheeting or transparent patch areas are utilized in the design of the article.

An advantage of such a composite down feather sheet is that it can be heat bonded to other fabric materials preventing its displacement in fabric articles when in use and thereby providing uniform thermal insulation as well as preventing displacement of the internal down sheet by stretching the external material elastically bonded to the down sheet. It also eliminates friction between the external covering material and the down sheet which could dislodge down feathers on external surfaces of the down sheet. Of course, the composite down feather sheet may be bonded to other articles that requires thermal insulation. The composite down feather sheet is also stretchable permitting its securement to elastic materials or about curved articles where the insulation requires to be stretched and secured by heat , such as hot air blow guns.

Although in the preferred embodiment described and illustrated, a web of stretchable elastic material is bonded to opposed faces of the down feather sheet, for certain insulating applications the web may be bonded to onluy one face of the down heather sheet and the other face maintain free of any covering or have a different covering sheet such as a net to provide air flow through the down feathers. The stretchable elastic web provides for thermal connection of the insulating down feather sheet to all sorts of commercial or industrial products where this type of insulation is desirable, such as for example in the upholstery industry or construction industry, etc..

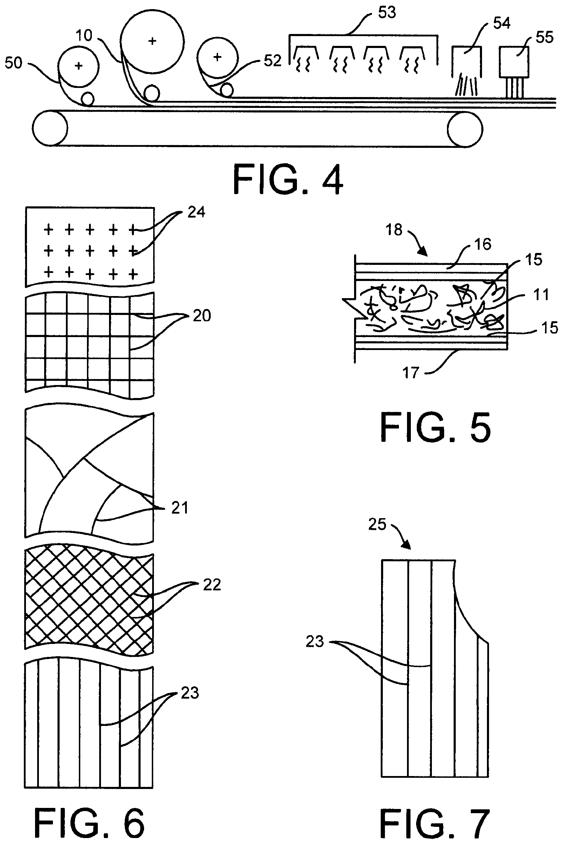

Because the down core is provided with opposed webs of stretchable elastic adhesive, this elastic adhesive can be activated to bind to fabric pieces or other type article by subjecting it to control heat in its softening to melting range of between 85 degrees C to 115 degrees C. As shown in Figure 5, for the fabrication of fabric articles, the down feather sheet can be bonded to an outer shell fabric material 16 and a lining fabric 17 to form a composite insulating material 18 ready to be pattern cut and assembled into an article of apparel, duvet cover, pillows, etc.. As shown in Figure 6, the laminated fabric sheet can also be supplied with stitch patterns such as the quilt stitch pattern 20 or a design pattern 21, a diagonal quilt 22, a line stitch pattern 23 or a simple tack stitch pattern 24. Accordingly, a garment manufacturer would need only to cut, for example, a jacket pattern 25 as shown in Figure 7 with decorative line stitches already made and ready for assembly. Such greatly reduces the fabrication cost to the garment manufacturer. Another advantage to the garment manufacturer is that by maintaining supplies of such composite fabric that he could fabricate an article of apparel with different stitch patterns or mixed with non-stitch composite fabric. Alternatively, the ferment manufacturer can assemble the insulated core with the opposed stretchable elastic webs to any outer fabrics and heat bind them together before cutting pattern pieces or after the fabric pieces are cut. This would simply require the installation of a fusing oven and conveyor.

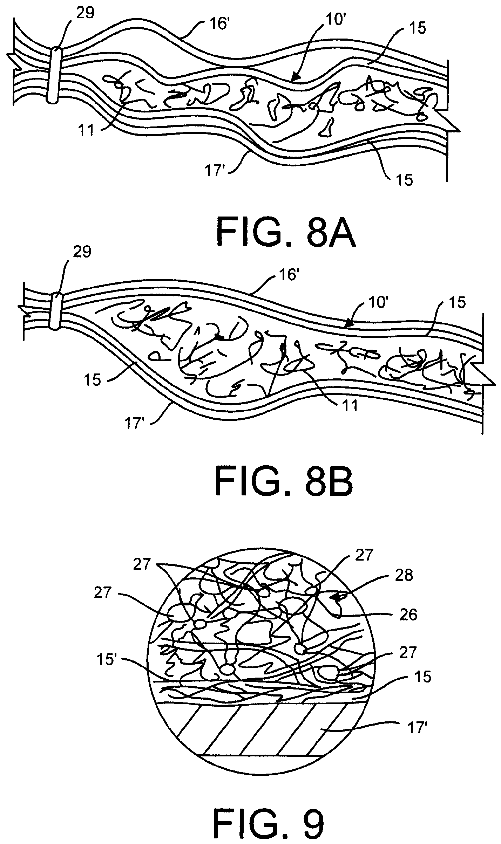

Another advantage by having the down feather sheet 10 bonded to the outer shell fabric material 16 is illustrated in Figures 8A to 9. As shown in Fig 8A, the down feather sheet 10' of the prior art is disposed in an article of apparel between a shell fabric material 16' and a lining material 17' and secured therebetween by peripheral stitch seams 29. Accordingly, the down feather sheet 10' is free to move between the shell fabric material 16' and the lining material 17' in non-stitched areas and is in frictional contact with the inner surfaces of the shell and lining fabric materials. Such distortion in the fabric of the article of apparel is particularly amplified during the washing and drying of the article of apparel in washing/*drying machines when the fabric is wet during washing and drying in washing/drying machines.

Figure 8B illustrates the composite down insulated feather sheet 10 of the present invention as bonded to the inner surface of the shell fabric material 16' and the lining material 17' and as can be seen the down feather sheet 10' is no longer free to move between the shell fabric material 16' and the lining material 17' but moves therewith and stretches therewith eliminating friction and unnecessary wear during washing and drying.

Figure 9 is an enlarged microscopic view showing the interconnection between the stretchable elastic adhesive web 15 and the down feather core and internal binder. As illustrated the down feather clusters 28 have a core 27 and down fibers 26 projecting from the core and intermingled with binders 28'. The feather clusters also attach to the inner surface 15' of the strectchable elastic adhesive 15 and are displaced with the flexible and stretchable elastic adhesive web when stretched in any direction as indicated by arrows 25.

The stretchable elastic adhesive web 15 herein utilized is manufactured by Protechnic, France, and is rated to have a wash resistance of up to about 90 degrees C. At washing temperatures the elastic adhesive will not melt but will remain attached to the fabric material and the core at its outer surface 15"as the temperatures of washing and drying machines are well below the softening point of 85 degrees C of the web. Accordingly, the elastic adhesive webs prevent the core of down feathers from clumping during washing or drying wherein the article of apparel undergoes a tumbling and stretching action in hot wash water and dry heat. Therefore, as the fabric material stretches and/or or distorts during such washing and drying, the down insulation sheet follows the same displacement and remains intact.

Referring now to Figure 3, there will be described an example of the method of fabricating the composite down feather sheet 10 of the present invention. As herein illustrated in schematic form, a conveyor 30 is driven by a motor 31 which is controlled by a controller 32 to regulate the speed of the conveyor dependent on the desired thickness of the down feather mixture 33 to be deposited on a dry flexible elastic web 36 of elastic adhesive fed on the top run 34 of the conveyor 30 from a wed supply roll 35. As the web 36 of stretchable elastic adhesive is conveyed under the mixing chamber 37 a down feather mixture of predetermined thickness is deposited on the web 36 and conveyed to a next station. The next station may be an oven 38 where the web of stretchable elastic adhesive and the down feather mixture is subjected to a controlled heat treatment to bond the feathers mixed with a chemical binding agent or binding fibers together as well as bonding the down feather mixture to the web of stretchable elastic adhesive. The temperature of the oven is set at a desirable temperature in the range of from about 85 degrees C to 115 degrees C which is in the softening to melting point of the elastic adhesive and the down chemical binding agent. Accordingly, this results in a down insulating material deposited and adhered to a elastic adhesive backing web.

In a preferred embodiment, an additional elastic adhesive web 39 is fed from a roll 40 onto the top of the down feather mixture 33 before entering the oven 38 whereby to heat bond the down feather mixture between opposed stretchable elastic adhesive webs 36 and 39 to bind the down therebetween to form the composite down feather insulating fabric sheet 10. The composite down feather insulating sheet 10 leaving the oven 38 is then fed to a cooling station 41 where jets of cool air is projected against the composite down feather insulating sheet 10 from one or opposed sides thereof through a support mesh conveyor section or platform 42.

Figure 4 illustrates further steps in the process for the production of a composite down insulating fabric sheet ready for use by a manufacture of fabric articles. These further process steps comprise feeding the composite down feather insulating sheet 10 onto a first fabric sheet 50 herein a lining material sheet disposed on a conveyor 51 and sandwiching the sheet 10 with a top fabric sheet 52 herein an outer shell fabric material. The bonded layers 50, 10 and 52 are then conveyed for a predetermined period of time into an oven 53 set at a temperature of between 85 degrees C to 115 degrees C to cause the stretchable elastic adhesive webs 50 and 52 to start softening and melting whereby to bond the down insulation core 11 of the composite down feather sheet 10 to opposed lining material sheet 50 and outer shell fabric sheet 52. The oven 53 may also be set at different temperatures from its entrance end to its exit end to progressively increase temperature to provide for controlled bonding of the elastic adhesive wed. This composite sheet is then conveyed to a cooling station 54 and a stitch pattern forming station, when required to form a stitch pattern material, to produce a roll of composite fabric insulating material ready for shipment to manufacturers for the construction of fabric articles.

It is within the ambit of the present invention to cover any obvious modifications of the embodiments described herein, provided such modifications fall within the scope of the appended claims.

## Claims

1. A composite material insulating sheet for the manufacture of fabric articles, comprising:
a composite down feather sheet (10, 10') comprising:
an insulating core (11) of down feathers (12) bound together by a chemical binding agent (13), said insulating core (11) of down feathers (12) being homogeneous and of substantially constant thickness and defining opposed first and second flat faces, the chemical binding agent (13) exhibiting, at least in part, elastic properties to constitute a stretchable insulating core;
an outer fiber thin web of stretchable elastic adhesive bonded to the first flat face of the insulating core (11); and
an inner fiber thin web of stretchable elastic adhesive bonded to the second flat face of the insulating core (11);
an outer shell fabric material (16, 16') bonded to the composite down feather sheet by the outer fiber thin web of stretchable elastic adhesive such that the composite down feather sheet moves together with the outer shell fabric material (16, 16'); and
a lining fabric material bonded (17, 17') to the composite down feather sheet by the inner fiber thin web of stretchable elastic adhesive such that the composite down feather sheet moves together with the lining fabric material.

2. The composite material insulating sheet as claimed in claim 1, wherein each of the outer and inner fiber thin webs of stretchable elastic adhesive is formed of polyurethane aliphatic fibers to provide a thin web having multi-directional stretchability, said fibers being white fibers to produce a substantially transparent elastic adhesive web having a weight of between 12 to 70 grams per meter square.

3. The composite material insulating sheet as claimed in claim 1, wherein said composite material insulating sheet has a stitching pattern formed therein.

4. The composite material insulating sheet as claimed in claim 1, wherein said composite material insulating sheet is cut in patterns with said core of down feathers (12) remaining captive between said outer shell fabric material (16) and lining fabric material by the outer and inner webs of stretchable elastic adhesive binding the composite down feather sheet to the outer shell fabric material (16, 16') and to the lining fabric material (17, 17').

5. The composite material insulating sheet as claimed in claim 1, wherein each of the outer and inner fiber thin webs of stretchable elastic adhesive is a fiber thin web formed of polyurethane aliphatic fibers.

6. The composite material insulating sheet as claimed in claim 5, wherein each of the outer and inner fiber thin webs of stretchable elastic adhesive has a softening to melting range of between 85 degrees C to 115 degrees C.

7. The composite material insulating sheet as claimed in claim 1, wherein the outer and inner fiber thin webs of stretchable elastic adhesive are heat bonded to the first and second flat faces by subjecting the insulating core (11) and the outer and inner fiber thin webs of stretchable elastic adhesive to a heat treatment at a temperature ranging from about 85 degrees C to 115 degrees C for a predetermined time.

8. The composite material insulating sheet as claimed in claim 5, wherein each of the outer and inner fiber thin webs is not a net of oriented stretchable fibers interconnected in a pattern with large openings between the interconnected fibers.

9. The composite material insulating sheet as claimed in claim 5, wherein each of the outer and inner fiber thin webs of stretchable elastic adhesive has a wash resistance of up to about 90 degrees C.

10. The composite material insulating sheet as claimed in claim 1, wherein each of the outer and inner fiber thin webs of stretchable elastic adhesive is formed of polyurethane fibers of random shape and is a breathable homogeneous air permeable web.

11. A method of fabricating a composite material insulating sheet according to claim 1 for the manufacture of fabric articles, the method comprising the steps of:
i) conveying on a conveyor and under a mixing chamber a first fiber thin web of stretchable elastic adhesive from a first roll of such fiber thin web,
ii) depositing from said mixing chamber on said first fiber thin web of stretchable elastic adhesive, down feathers (12) mixed with a chemical binding agent (13) as said first fiber thin web of stretchable elastic adhesive is displaced whereby to form a core of down feathers (12) of substantially constant thickness on said first fiber thin web of stretchable elastic adhesive,
iii) positioning on a top surface of said core of down feathers (12) a second fiber thin web of stretchable elastic adhesive from a second roll of such fiber thin web;
iv) conveying said first and second fiber thin webs of stretchable elastic adhesive and said core of down feathers (12) mixed with the chemical binding agent (13) through an oven set at a predetermined temperature to cause said chemical binding agent (13) to bind to said down feathers (12) and said first and second fiber thin webs of stretchable elastic adhesive to bind to a bottom surface and the top surface of said core of down feathers (12) respectively, thereby forming a composite down feather sheet;
v) conveying the composite down feather sheet between an outer shell fabric sheet and a sheet of lining material and through an oven set at a predetermined temperature to cause said first and second fiber thin webs of stretchable elastic adhesive to begin to melt and further bond to said outer shell fabric sheet and said sheet of lining material to form the composite material insulating sheet.

12. The method as claimed in claim 11, wherein said predetermined temperature is in the range of from about 85 degrees C to 115 degrees C and wherein after step (iv) there is further provided the step of cooling said composite down insulating fabric sheet.

13. The method as claimed in claim 12, wherein each of said first and second fiber thin webs of stretchable elastic adhesive has a wash resistance of up to about 90 degrees C.

14. The method as claimed in claim 11, wherein there is further provided the step of stitching a pattern in said composite down insulating fabric sheet or tack stitching said composite down insulating fabric sheet.

## Patentansprüche

1. Isolierlaken aus Verbundmaterial für die Herstellung von Stoffartikeln, umfassend:
ein zusammengesetztes Daunenfederlaken (10, 10'), umfassend:
einen Isolierkern (11) aus Daunenfedern (12), die durch ein chemisches Bindemittel (13) zusammengehalten werden, wobei der Isolierkern (11) aus Daunenfedern (12) homogen ist und eine im Wesentlichen konstante Dicke aufweist und eine erste und eine gegenüberliegende zweite flache Fläche definiert, wobei das chemische Bindemittel (13) zumindest teilweise elastische Eigenschaften aufweist, um einen dehnbaren Isolierkern zu formen;
ein äußeres faserdünnes Gewebe aus dehnbarem elastischem Klebstoff, das mit der ersten flachen Fläche des Isolierkerns (11) verbunden ist; und
ein inneres faserdünnes Gewebe aus dehnbarem elastischem Klebstoff, das mit der zweiten flachen Fläche des Isolierkerns (11) verbunden ist;
ein Außenhüllenstoffmaterial (16, 16'), das durch das äußere faserdünne Gewebe aus dehnbarem elastischem Klebstoff mit dem zusammengesetzten Daunenfederlaken verbunden ist, sodass sich das zusammengesetzte Daunenfederlaken zusammen mit dem Außenhüllenstoffmaterial (16, 16') bewegt; und
ein Futterstoffmaterial (17, 17'), das durch das innere faserdünne Gewebe aus dehnbarem elastischem Klebstoff mit dem zusammengesetzten Daunenfederlaken verbunden ist, sodass sich das zusammengesetzte Daunenfederlaken zusammen mit dem Futterstoffmaterial bewegt.

2. Isolierlaken aus Verbundmaterial nach Anspruch 1, wobei jedes des äußeren und inneren faserdünnen Gewebes aus dehnbarem elastischem Klebstoff aus aliphatischen Polyurethanfasern ausgebildet ist, um ein dünnes Gewebe mit multidirektionaler Dehnbarkeit bereitzustellen, wobei die Fasern weiße Fasern sind, um ein im Wesentlichen transparentes elastisches Klebstoffgewebe zu erzeugen, das ein Gewicht zwischen 12 und 70 Gramm pro Quadratmeter aufweist.

3. Isolierlaken aus Verbundmaterial nach Anspruch 1, wobei das Isolierlaken aus Verbundmaterial ein darin ausgebildetes Nahtmuster aufweist.

4. Isolierlaken aus Verbundmaterial nach Anspruch 1, wobei das Isolierlaken aus Verbundmaterial in Muster geschnitten ist, wobei der Kern aus Daunenfedern (12) zwischen dem Außenhüllenstoffmaterial (16) und dem Futterstoffmaterial durch das äußere und innere Gewebe aus dehnbarem elastischem Klebstoff festgehalten wird, der das zusammengesetzte Daunenfederlaken an das Außenhüllenstoffmaterial (16, 16') und das Futterstoffmaterial (17, 17') bindet.

5. Isolierlaken aus Verbundmaterial nach Anspruch 1, wobei jedes des äußeren und inneren faserdünnen Gewebes aus dehnbarem elastischem Klebstoff ein faserdünnes Gewebe ist, das aus aliphatischen Polyurethanfasern ausgebildet ist.

6. Isolierlaken aus Verbundmaterial nach Anspruch 5, wobei jedes des äußeren und inneren faserdünnen Gewebes aus dehnbarem elastischem Klebstoff einen Erweichungs- bis Schmelzbereich zwischen 85 °C und 115 °C aufweist.

7. Isolierlaken aus Verbundmaterial nach Anspruch 1, wobei das äußere und innere faserdünne Gewebe aus dehnbarem elastischem Klebstoff durch Wärme mit der ersten und zweiten flachen Seite verbunden sind, indem der Isolierkern (11) und das äußere und innere faserdünne Gewebe aus dehnbarem elastischem Klebstoff einer Wärmebehandlung bei einer Temperatur im Bereich von etwa 85 Grad C bis 115 Grad C für eine vorbestimmte Zeit unterzogen werden.

8. Isolierlaken aus Verbundmaterial nach Anspruch 5, wobei jedes des äußeren und inneren faserdünnen Gewebes kein Netz aus ausgerichteten dehnbaren Fasern ist, die in einem Muster mit großen Öffnungen zwischen den verbundenen Fasern miteinander verbunden sind.

9. Isolierlaken aus Verbundmaterial nach Anspruch 5, wobei jedes des äußeren und inneren faserdünnen Gewebes aus dehnbarem elastischem Klebstoff eine Waschbeständigkeit von bis zu etwa 90 Grad C aufweist.

10. Isolierlaken aus Verbundmaterial nach Anspruch 1, wobei jedes des äußeren und inneren faserdünnen Gewebes aus dehnbarem elastischem Klebstoff aus Polyurethanfasern beliebiger Form ausgebildet ist und ein atmungsaktives homogenes luftdurchlässiges Gewebe ist.

11. Verfahren zum Herstellen eines Isolierlakens aus Verbundmaterial nach Anspruch 1 für die Herstellung von Stoffartikeln, wobei das Verfahren die folgenden Schritte umfasst:
i) Fördern eines ersten faserdünnen Gewebes aus dehnbarem elastischem Klebstoff von einer ersten Rolle eines derartigen faserdünnen Gewebes auf einem Förderband und unter einer Mischkammer hindurch,
ii) Abscheiden von mit einem chemischen Bindemittel (13) vermischten Daunenfedern (12) aus der Mischkammer auf dem ersten faserdünnen Gewebe aus dehnbarem elastischem Klebstoff, während das erste faserdünne Gewebe aus dehnbarem elastischem Klebstoff verschoben wird, um dadurch einen Kern aus Daunenfedern (12) mit im Wesentlichen konstanter Dicke auf dem ersten faserdünnen Gewebe aus dehnbarem elastischem Klebstoff auszubilden,
iii) Positionieren eines zweiten faserdünnen Gewebes aus dehnbarem elastischem Klebstoff von einer zweiten Rolle eines derartigen faserdünnen Gewebes auf einer Oberseite des Kerns aus Daunenfedern (12);
iv) Fördern des ersten und zweiten faserdünnen Gewebes aus dehnbarem elastischem Klebstoff und des Kerns aus Daunenfedern (12), vermischt mit dem chemischen Bindemittel (13), durch einen auf eine vorbestimmte Temperatur eingestellten Ofen, um zu bewirken, dass sich das chemische Bindemittel (13) an die Daunenfedern (12) bindet und dass sich das erste und zweite faserdünne Gewebe aus dehnbarem elastischem Klebstoff an eine Unterseite bzw. die Oberseite des Kerns aus Daunenfedern (12) binden, wodurch ein zusammengesetztes Daunenfederlaken ausgebildet wird;
v) Fördern des zusammengesetzten Daunenfederlakens zwischen einem Außenhüllenstofflaken und einem Laken aus Futtermaterial und durch einen auf eine vorbestimmte Temperatur eingestellten Ofen, um zu bewirken, dass das erste und zweite faserdünne Gewebe aus dehnbarem elastischem Klebstoff zu schmelzen beginnen und sich weiter an das Außenhüllenstofflaken und das Laken aus Futtermaterial binden, um das Isolierlaken aus Verbundmaterial auszubilden.

12. Verfahren nach Anspruch 11, wobei die vorbestimmte Temperatur im Bereich von etwa 85 Grad C bis 115 Grad C liegt und wobei nach Schritt (iv) ferner der Schritt des Abkühlens des Isolierstofflakens aus zusammengesetzter Daune vorgesehen ist.

13. Verfahren nach Anspruch 12, wobei jedes des ersten und zweiten faserdünnen Gewebes aus dehnbarem elastischem Klebstoff eine Waschbeständigkeit von bis zu 90 Grad C aufweist.

14. Verfahren nach Anspruch 11, wobei ferner der Schritt des Nähens eines Musters in das Isolierstofflaken aus zusammengesetzter Daune oder des Heftens des Isolierstofflakens aus zusammengesetzter Daune vorgesehen ist.

## Revendications

1. Feuille isolante en matériau composite pour la fabrication d'articles en tissu, comprenant :
une feuille de duvet composite (10, 10') comprenant :
une âme isolante (11) en plumes de duvet (12) liées entre elles par un agent de liaison chimique (13), ladite âme isolante (11) en plumes de duvet (12) étant homogène et d'épaisseur sensiblement constante et définissant des première et seconde faces plates opposées, l'agent de liaison chimique (13) présentant, au moins en partie, des propriétés élastiques pour constituer une âme isolante étirable ;
une fine couche de fibres externe d'adhésif élastique étirable liée à la première face plate de l'âme isolante (11) ; et
une fine couche de fibres interne d'adhésif élastique étirable liée à la seconde face plate de l'âme isolante (11) ;
un matériau de tissu d'enveloppe externe (16, 16') lié à la feuille de duvet composite par la fine couche de fibres externe d'adhésif élastique étirable de sorte que la feuille de duvet composite se déplace avec le matériau de tissu d'enveloppe externe (16, 16') ; et
un matériau de tissu de doublure lié (17, 17') à la feuille de duvet composite par la fine couche de fibres interne d'adhésif élastique étirable de sorte que la feuille de duvet composite se déplace avec le matériau de tissu de doublure.

2. Feuille isolante de matériau composite selon la revendication 1, dans laquelle chacune des fines couches de fibres externe et interne d'adhésif élastique étirable est formée de fibres aliphatiques de polyuréthane pour fournir une fine couche ayant une extensibilité multidirectionnelle, lesdites fibres étant des fibres blanches pour produire une couche adhésive élastique sensiblement transparente ayant un poids compris entre 12 et 70 grammes par mètre carré.

3. Feuille isolante en matériau composite selon la revendication 1, dans laquelle ladite feuille isolante en matériau composite a un motif de couture formé à l'intérieur.

4. Feuille isolante en matériau composite selon la revendication 1, dans laquelle ladite feuille isolante en matériau composite est découpée selon des motifs avec ladite âme de plumes de duvet (12) restant captive entre ledit matériau de tissu d'enveloppe externe (16) et ledit matériau de tissu de doublure par les couches externe et interne d'adhésif élastique étirable liant la feuille de duvet composite au matériau de tissu d'enveloppe externe (16, 16') et au matériau de tissu de doublure (17, 17').

5. Feuille isolante en matériau composite selon la revendication 1, dans laquelle chacune des fines couches de fibres externe et interne d'adhésif élastique étirable est une fine couche de fibres formée de fibres aliphatiques de polyuréthane.

6. Feuille isolante en matériau composite selon la revendication 5, dans laquelle chacune des fines couches de fibres externe et interne d'adhésif élastique étirable a une plage de ramollissement à fusion comprise entre 85 degrés C et 115 degrés C.

7. Feuille isolante en matériau composite selon la revendication 1, dans laquelle les fines couches de fibres externe et interne d'adhésif élastique étirable sont liées thermiquement aux première et seconde faces plates en soumettant l'âme isolante (11) et les fines couches de fibres externe et interne d'adhésif élastique étirable à un traitement thermique à une température allant d'environ 85 degrés C à 115 degrés C pendant une durée prédéterminée.

8. Feuille isolante en matériau composite selon la revendication 5, dans laquelle chacune des fines couches de fibres externe et interne n'est pas un réseau de fibres étirables orientées interconnectées selon un motif avec de grandes ouvertures entre les fibres interconnectées.

9. Feuille isolante en matériau composite selon la revendication 5, dans laquelle chacune des fines couches de fibres externe et interne d'adhésif élastique étirable a une résistance au lavage allant jusqu'à environ 90 degrés C.

10. Feuille isolante en matériau composite selon la revendication 1, dans laquelle chacune des fines couches de fibres externe et interne d'adhésif élastique étirable est formée de fibres de polyuréthane de forme aléatoire et est une couche perméable à l'air homogène et respirante.

11. Procédé de fabrication d'une feuille isolante en matériau composite selon la revendication 1 pour la fabrication d'articles en tissu, le procédé comprenant les étapes de :
i) transport sur un convoyeur et sous une chambre de mélange d'une première fine couche de fibres d'adhésif élastique étirable provenant d'un premier rouleau d'une telle fine couche de fibres,
ii) dépôt, à partir de ladite chambre de mélange, sur ladite première fine couche de fibres d'adhésif élastique étirable, de plumes de duvet (12) mélangées à un agent de liaison chimique (13) tandis que ladite première fine couche de fibres d'adhésif élastique étirable est déplacée, de manière à former une âme de plumes de duvet (12) d'épaisseur sensiblement constante sur ladite première fine couche de fibres d'adhésif élastique étirable,
iii) positionnement sur une surface supérieure de ladite pale de plumes de duvet (12) d'une seconde fine couche de fibres d'adhésif élastique étirable provenant d'un second rouleau d'une telle fine couche de fibres ;
iv) transport desdites première et seconde fines couches de fibres d'adhésif élastique étirable et de ladite âme de plumes de duvet (12) mélangée à l'agent de liaison chimique (13) à travers un four réglé à une température prédéterminée pour amener ledit agent de liaison chimique (13) à se lier auxdites plumes de duvet (12) et lesdites première et seconde fines couches de fibres d'adhésif élastique étirable à se lier respectivement à une surface inférieure et à la surface supérieure de ladite âme de plumes de duvet (12), formant ainsi une feuille de duvet composite ;
v) transport de la feuille de duvet composite entre une feuille de tissu d'enveloppe externe et une feuille de matériau de doublure et à travers un four réglé à une température prédéterminée pour amener lesdites première et seconde fines couches de fibres d'adhésif élastique étirable à commencer à fondre et à se lier davantage à ladite feuille de tissu d'enveloppe externe et ladite feuille de matériau de doublure pour former la feuille isolante en matériau composite.

12. Procédé selon la revendication 11, dans lequel ladite température prédéterminée est dans la plage d'environ 85 degrés C à 115 degrés C et dans lequel, après l'étape (iv), est en outre prévue l'étape de refroidissement de ladite feuille de tissu isolante de duvet composite.

13. Procédé selon la revendication 12, dans lequel chacune desdites première et seconde fines couches de fibres d'adhésif élastique étirable a une résistance au lavage allant jusqu'à environ 90 degrés C.

14. Procédé selon la revendication 11, dans lequel est en outre prévue l'étape de couture d'un motif dans ladite feuille de tissu isolante de duvet composite ou de piquage de points de bâti de ladite feuille de tissu isolante de duvet composite.
